# EUROPEAN PATENT SPECIFICATION

(11) **EP 3 139 206 B1**
(45) Date of publication and mention of the grant of the patent: **27.03.2019**
(21) Application number: 16183542.6
(22) Date of filing: 10.08.2016
(51) Int. Cl.: G02B 19/00, G02B 3/00, G02B 5/02

(54) **A LENS FOR LIGHTING DEVICES, CORRESPONDING DEVICE AND METHOD**
LINSE FÜR BELEUCHTUNGSVORRICHTUNGEN, ZUGEHÖRIGE VORRICHTUNG UND VERFAHREN
LENTILLE POUR DISPOSITIFS D'ÉCLAIRAGE, DISPOSITIF ET PROCÉDÉ CORRESPONDANTS

(30) Priority: 01.09.2015 IT UB20153331
(43) Date of publication of application: 08.03.2017
(73) Proprietor: OSRAM GmbH, 80807 München (DE); OSRAM S.P.A. - SOCIETA' RIUNITE OSRAM EDISON CLERICI, 20126 Milano (IT)
(72) Inventor: FRISON, Renato, I-33083 Chions (Pordenone) (IT)
(74) Representative: Bosotti, Luciano

(56) References cited:
- EP-A1- 2 827 050
- US-A- 5 546 235
- US-A- 5 890 791

## Description

### Technical Field

The description relates to lighting devices.

One or more embodiments may find employment in electrically-powered light radiation sources such as solid-state light radiation sources, e.g. LED sources.

### Technological Field

In various sectors of the lighting technology the need may arise of a lighting distribution having e.g. an oval shape, i.e. having a specific value of the so called FWHM beam angle ratio, wherein FWHM is an acronym for Full Width, Half Maximum, a parameter indicating the width of the lighting beam at a middle value of the lighting intensity.

Said ratio may be defined as the ratio of the FWHM value of the radiation pattern distribution along a plane C (usually the plane identified as the 0-180° plane or 90°-270° plane) to the orthogonal C plane.

A luminaire may be provided with a specific, optionally customized optics in order to achieve the desired performance, e.g. as regards the radiation emission pattern.

For example, in order to shape the light radiation pattern emitted by a radiation emitting surface or a volume source (e.g. a LED source or a traditional light radiation source), it is possible to resort to lenses and/or reflectors adapted e.g. to be formed with glass or e.g. injection moulded plastic material.

In this way, however, different radiation patterns may require e.g. optical devices (such as lenses) adapted to be used interchangeably. As a matter of fact, a specific lens or reflector may meet the requirements of a certain product (e.g. as regards the radiation pattern or the FWHM beam angle) and therefore they may be able to operate in one particular application and may not be used in mutual combinations, e.g. to achieve or create different radiation patterns.

Moreover, it is generally desirable to change the radiation pattern (e.g. in order to obtain light distributions with different oval shapes) while keeping the same luminaire structure. This result may be achieved with dedicated lenses or reflectors, which are mounted onto a basic device as accessories.

In order to obtain an oval shape of the pattern, it is possible to use an array of lenses of the type currently denoted as lenslet array, coupled to a narrow beam optics so as to spread light differently (i.e. more in a direction than in the other) while preserving the original beam angle in the orthogonal direction. In this case, however, the highest achievable FWHM beam ratio is limited by the curvature radius of the single cylindrical optical element of the lenslet array.

Documents such as DE 89 15 821 U1, EP 1 130 311 A2, US 5 546 235 A, US 5 890 791 A and EP 2 827 050 A1 represent the prior art.

### Object and Summary

One or more embodiments aim at overcoming the previously outlined drawbacks.

According to one or more embodiments, said object may be achieved thanks to a lens having the features set forth in the claims that follow.

One or more embodiments may also concern a corresponding lighting device as well as a corresponding method.

The claims are an integral part of the technical teaching provided herein with reference to the embodiments.

One or more embodiments achieve a higher FWHM beam ratio than obtainable by a lenslet array with cylindrical elements.

One or more embodiments enable the achievement, in a lighting device, of an asymmetrical light radiation beam pattern, adapted to bring about an oval-shaped projection onto an illuminated surface (e.g. onto a wall) having a high FWHM beam ratio between the main meridians.

In one or more embodiments, the radiation pattern may be obtained by acting on a teeth-like profile of the optical surfaces and on the direction of the teeth-like or rib formations arranged on at least one of the lens surfaces.

Beside achieving a higher FWHM beam ratio, one or more embodiments lead to a smoother radiation pattern than obtainable with cylindrical lenslet arrays.

### Brief Description of the Figures

One or more embodiments will now be described, by way of non-limiting example only, with reference to the annexed Figures, wherein:
- Figure 1 is a perspective view of a lens according to one or more embodiments,
- Figure 2 is a section along line II-II in Figure 1,
- Figure 3 shows, in a magnified scale, the portion of Figure 2 denoted by arrow III,
- Figure 4 is a plan view of a lens according to one or more embodiments, and
- Figures 5 to 7 schematically show operating features of one or more embodiments.

It will be appreciated that, for clarity of illustration, the various Figures may not be drawn to the same scale.

### Detailed Description

In the following description, numerous specific details are given in order to provide a thorough understanding of embodiments. The embodiments may be practiced without one or several of the specific details, or with other methods, components, materials, etc. In other instances, well-known structures, materials, or operations are not shown or described in detail to avoid obscuring the various aspects of the embodiments.

Reference throughout this specification to "one embodiment" or "an embodiment" means that a particular feature, structure, or characteristic described in connection with the embodiment is included in at least one embodiment. Thus, the possible appearances of the phrases "in one embodiment" or "in an embodiment" in various places throughout this specification are not necessarily all referring to the same embodiment. Furthermore, particular features, structures, or characteristics may be combined in any suitable manner in one or more embodiments.

The headings provided herein are given for convenience only, and therefore do not interpret the extent of protection or the scope of the embodiments.

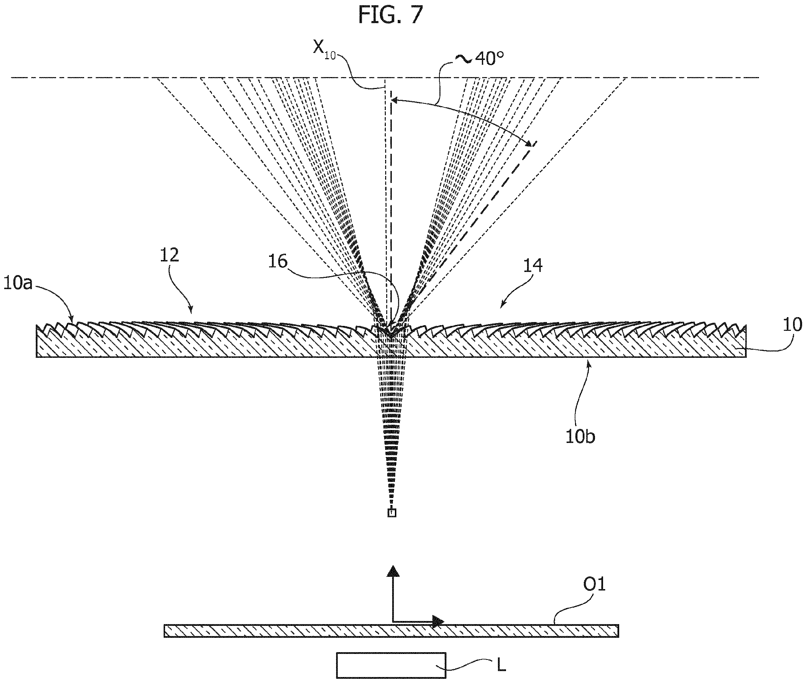

One or more embodiments may refer to a lens adapted to be coupled (e.g. as shown in Figure 7, which will be better detailed in the following) to a light radiation source L. The latter may be, in one or more embodiments, an electrically-powered light radiation source L, such as a solid-state light radiation source, e.g. a LED source.

In one or more embodiments, the lens may comprise a body 10 of material permeable to the light radiation emitted by source L. In one or more embodiments, the lens body 10 may comprise a transparent material, such as glass or a plastic material, which may be e.g. injection moulded.

In one or more embodiments, as exemplified in the Figures, the lens may have a circular shape and/or a generally flat shape, such shapes being however not mandatory in themselves.

In one or more embodiments, the lens body 10 may have opposed surfaces, respectively denoted as 10a and 10b.

In one or more embodiments, the first surface 10a may have a surface sculpturing, while the second surface 10b may be substantially flat.

In one or more embodiments, the lens may be coupled to source L so that the radiation emitted by the source traverses the lens.

In one or more embodiments, the lens may be coupled to source L as exemplified in Figure 7, i.e. with the second (planar) surface 10b facing towards radiation source L and with the first (sculptured) surface facing away from light radiation source L.

In one or more embodiments, the lens body 10 may therefore include a planar (e.g. circular) element of a light permeable material, which carries (e.g. on the first surface 10a) a rib-and-groove arrangement generally having two portions 12 and 14, extending on opposed sides with respect to a transversal line 16.

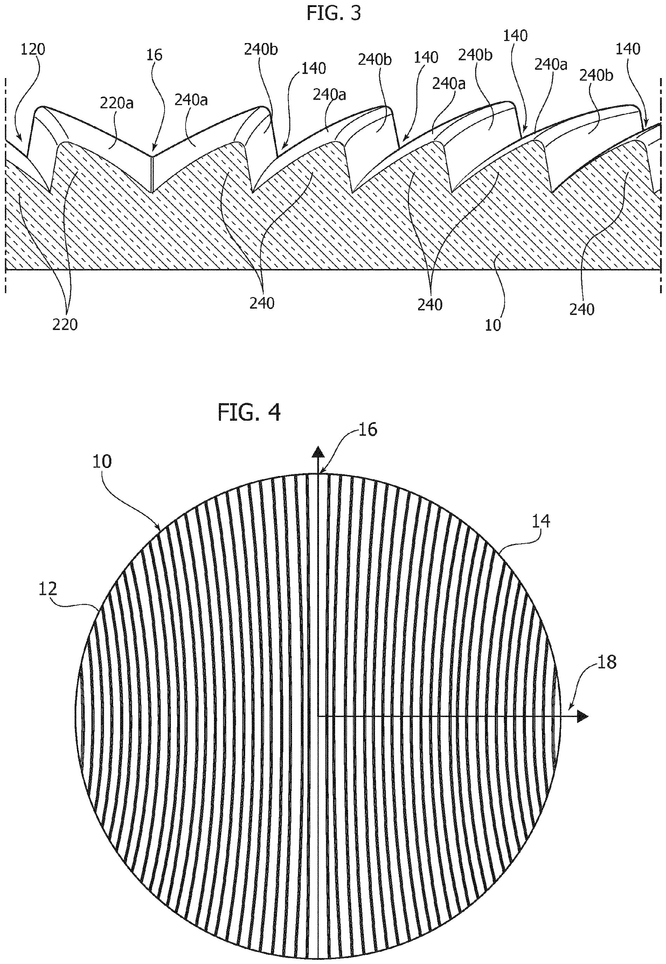

In one or more embodiments, line 16 is adapted to form (as can be seen e.g. in Figure 4) a so-called vertical meridian separating both portions 12 and 14, each of which has a crescent shape if lens 10 is circular.

In one or more embodiment, both portions 12 and 14 of the rib-and-groove arrangement provided on surface 10a may be mirror-symmetrical with respect to transversal line (vertical meridian) 16.

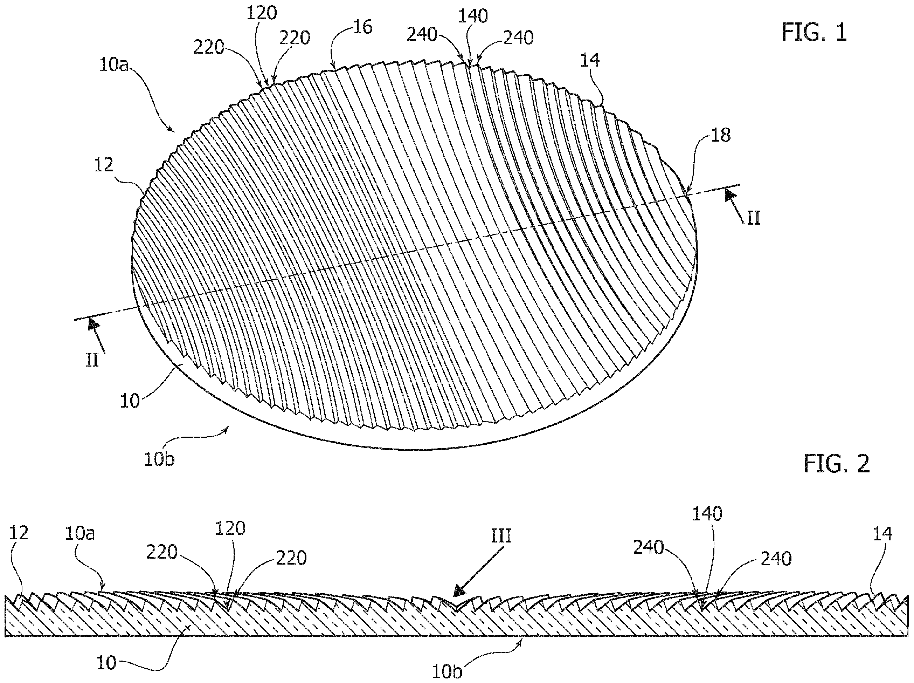

As can be seen e.g. in the perspective view of Figure 1 or in the plan view of Figure 4, in one or more embodiments portions 12 and 14 of the grooved arrangement each comprise a certain number of grooves 120, 140 separated by rib formations 220, 240.

In one or more embodiments, lens body 10 may therefore have a first 10a and a second 10b mutually opposed surfaces and two arrays of rib formations 220, 240 on the first surface 10a of body 10, which extend on opposed sides with respect to transversal line 16 of lens body 10.

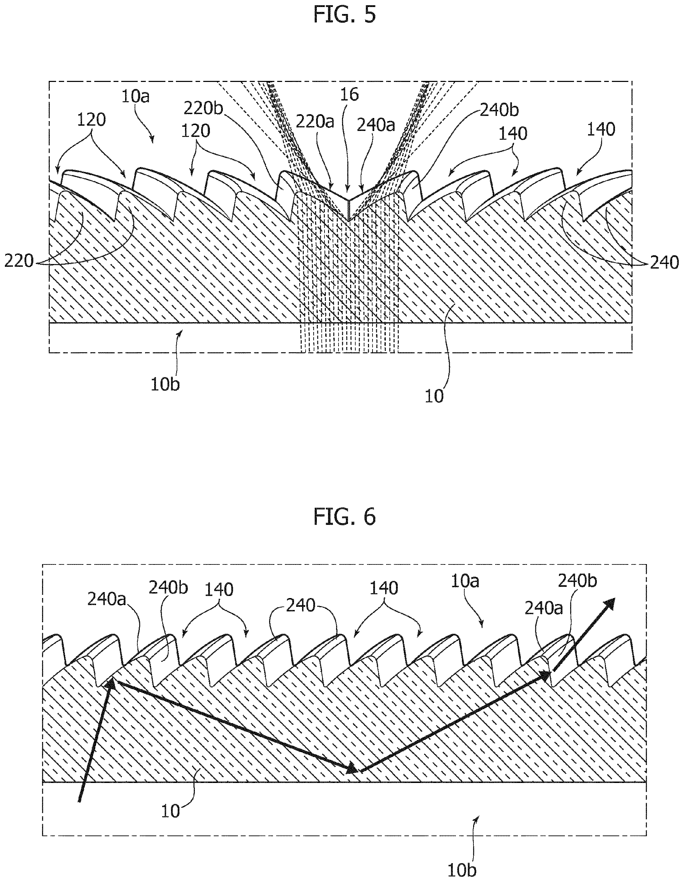

In one or more embodiments, the rib formations 220, 240 of both arrays may extend along transversal line 16, with a first side 220a, 240a facing towards transversal line 16 and a second side 220b, 240b facing away from transversal line 16: see for example Figures 3 and 5.

In one or more embodiments, the rib formations 220, 240 may have a concavity facing away from transversal line 16, such concavity increasing (i.e. becoming more marked) from the rib formations nearest to transversal line 16 to the rib formations farthest from transversal line 16.

For example, in one or more embodiments, the grooves 120, 140 and the rib formations 220, 240 nearest to transversal line 16 may be substantially straight, while the other grooves 120, 140 and rib formations 220, 240 may have a curved shape, the concavity (facing away from line 16, i.e. outwardly of lens body 10) increasing with the distance from line 16.

In other words, as the distance from line 16 increases, the grooves 120, 140 and the rib formations have an increasingly marked concavity, so that the grooves farthest from transversal line 16 are more concave, i.e. more curved, than the rib formations nearest to transversal line 16.

In other words, in one or more embodiments grooves 120, 140 and rib formations 220 and 240 may extend along curved paths (e.g. shaped as or similar to portions of an arc of a circle) having a curvature radius which, starting from an ideally infinite value at line 16 (the rib formations 220 and 240 adjacent to line 16 being practically straight), gradually reduces as the distance from line 16 increases, along a line 18 (in the two opposite directions away from line 16) which is orthogonal to line 16 and which can be considered as representing the "horizontal meridian" of lens 10.

In one or more embodiments (see for instance the magnified view in Figure 3) the rib formations 220, 240 may have an asymmetrical cross-section profile, similar to a scalene triangle, i.e. a sawtooth-like profile, the "inner" side 220a, 240a (i.e. the side facing towards line 16) being larger or wider (e.g. twice as wide) than the "outer" side 220b, 240b (i.e. the side facing away from line 16).

In other words, the rib formations 220, 240 have a sawtooth-like cross-section profile, the second side 220b, 240b being steeper than the first side 220a, 240a.

In one or more embodiments, the first side 220a, 240a may be curved, optionally convex, the convexity being directed outwardly of the lens, while the second side 220a, 240b is substantially flat.

Defining such a side, and optionally other parts of the lens, as "substantially" having some specific features takes into account the tolerances which are intrinsically present in the lens body 10, e.g. due to moulding.

Figure 7 exemplifies the possible use of a lens as previously described in combination with a light radiation source L, which is used to illuminate a surface not visible in the Figure but which may be considered as located above in the Figure.

One or more embodiments, as exemplified in Figure 7, may therefore be based on the use, first of all, of an "input" optics O1, in order to obtain a certain space distribution of the light radiation emitted by source L, and then of the coupling to such light radiation source L (and to optics O1, if present) a lens according to one or more embodiments acting as an optical accessory, which is located in such a way as to meet certain requirements as regards the "target" (i.e. the illuminated area) and as regards the radiation pattern.

Figures 5 to 7 refer to the possible coupling of a lens as exemplified herein to a light radiation source provided with an optical system O1 (of a known type) adapted to produce a symmetrical light radiation pattern having an FWHM value e.g. equal to or lower than 24°.

Thanks to the provision of sculptured surface 10a, the propagation of the light radiation across lens 10 achieves significant widenings of e.g. 40°, with an improvement over traditional systems (having cylinder-shaped optical surfaces) by 10° or more.

In one or more embodiments, the rib formations 220, 240 may be aligned with the "vertical meridian", i.e. line 16, at the lowest FWHM value of the output light radiation pattern, i.e. with an orientation substantially orthogonal to the highest FWHM value of the output light radiation pattern, which is aligned with the "horizontal meridian", i.e. line 18 in the Figures.

It will be appreciated that, in one or more embodiments, the improvement of the FWHM beam ratio value may be due to two reasons.

First of all, the increase of the optical power along one of the meridians of lens 10 is not given by cylindrical lenslet arrays, but by the rib formations 220, 240 having an asymmetrical, approximately triangular profile, which is adapted to be modelled as exemplified e.g. in Figure 3, specifically with the first side 220a, 240 being curved (convex outwardly of the lens and concave inwardly of the lens), while the second side 220b, 240b, which acts as a separation side, is substantially flat.

In the second place, grooves 120, 140 and rib formations 220, 240 are not straight but curved (the curvature degree or concavity gradually increasing with the distance from line 16) as exemplified in the Figures.

Figures 5 and 6 schematically exemplify the possible effect of the profile of the rib formations 220, 240 (sides 220a and 240a).

In one or more embodiments, a combined effect is achieved with a propagation / refraction mechanism (Figure 5) in the middle area of the lens, together with a reflection mechanism (e.g. a Total Internal Reflection, TIR - Figure 6) adapted to send the light radiation from the first surface 10a of lens 10 towards the second surface 10b. Moreover, the light radiation towards the first surface 10a, from which the light radiation has been previously reflected inwardly of lens 10, is further projected with a wider diverging angle from middle axis X10 (Figure 7), therefore achieving a higher widening angle of the rays than obtainable with a cylindrical profile.

The general concavity of the rib formations 220, 240 in the plane of surface 10a, having a concavity which increases, i.e. which becomes increasingly marked, and therefore having a curvature radius which decreases as the distance from line 16 (vertical meridian) increases, is adapted to "bend" or "flex" the ray distribution so that light artefacts may be reduced and the illuminance pattern is made more uniform and smoother in the light radiation projected onto an illuminated surface, e.g. a wall located at a certain distance from the lighting device and perpendicular to the optical axis thereof.

Without prejudice to the basic principles, the implementation details and the embodiments may vary, even appreciably, with respect to what has been described herein by way of non-limiting example only, without departing from the extent of protection.

The extent of protection is defined by the annexed claims.

## Claims

1. A lens for lighting devices, including a lens body (10) of light permeable material with first (10a) and second (10b) mutually opposed surfaces and two arrays of rib formations (220, 240) on said first surface (10a) of the lens body (10) lying on opposed sides with respect to a transversal line (16) of the lens body (10), wherein the rib formations (220, 240) in said two arrays extend on said first surface (10a) of the lens body (10) alongside of said transversal line (16), said rib formations (220, 240) having:
- a first side (220a, 240a) facing towards said transversal line (16) and a second side (220b, 240b) facing away from said transversal line (16); and
- a concavity of said rib formations facing away from said transversal line (16), said concavity increasing from the rib formations nearest to said transversal line (16) to the rib formations farthest from said transversal line (16) .

2. The lens of claim 1, wherein said arrays of rib formations (220, 240) are mirror-symmetrical with respect to said transversal line (16).

3. The lens of claim 1 or claim 2, wherein:
- said first side (220a, 240a) of the rib formations (220, 240) is curved, preferably convex with convexity directed outwardly of the lens (10), and/or
- said second side (220b, 240b) of the rib formations (220, 240) is substantially flat, and/or
- said first side (220a, 240a) of the rib formations (220, 240) is larger than said second side (220b, 240b).

4. The lens of any of the previous claims, wherein said second surface (10b) of the lens body (10) is substantially flat.

5. The lens of any of the previous claims, wherein said lens body (10) is circular.

6. The lens of claim 5, wherein said transversal line (16) is a diametrical line to said circular lens body (10).

7. The lens of any of the previous claims, wherein said lens body (10) includes transparent material, preferably glass or plastics material.

8. A lighting device, including:
- an electrically-powered light radiation source (L), preferably a solid-state light radiation source such as a LED source, and
- a lens (10) according to any of claims 1 to 7, coupled with said light radiation source (L), preferably with said first surface (10a) of the lens body (10) facing away from said light radiation source (L), whereby light radiation from said source (L) traverses said lens (10).

9. A method of providing illumination of a surface by means of an electrically-powered light radiation source (L), preferably a solid-state light radiation source such as a LED source, projecting light radiation towards surface, the method including setting between said light radiation source (L) and said surface a lens (10) according to any of claims 1 to 7, preferably with said first surface (10a) of the lens body (10) facing away from said light radiation source (L).

## Patentansprüche

1. Linse für Beleuchtungsvorrichtungen, einschließlich eines Linsenkörpers (10) aus lichtdurchlässigem Material mit ersten (10a) und zweiten (10b) gemeinsam gegenüberliegenden Oberflächen und zwei Anordnungen von Rippenformationen (220, 240) auf der ersten Oberfläche (10a) des Linsenkörpers (10), die auf gegenüberliegenden Seiten bezüglich einer transversalen Linie (16) des Linsenkörpers (10) liegen, wobei sich die Rippenformationen (220, 240) in den zwei Anordnungen auf der ersten Oberfläche (10a) des Linsenkörpers (10) entlang der transversalen Linie (16) erstrecken, wobei die Rippenformationen (220, 240) aufweisen:
- eine erste Seite (220a, 240a), die hin zu der transversalen Linie (16) gerichtet ist, und eine zweite Seite (220b, 240b), die weg von der transversalen Linie (16) gerichtet ist; und
- eine Wölbung der Rippenformationen, die weg von der transversalen Linie (16) gerichtet ist, wobei die Wölbung der Rippenformationen, die am nächsten an der transversalen Linie (16) liegen, zu den Rippenformationen, die am weitesten von der transversalen Linie (16) weg liegen, zunimmt.

2. Linse nach Anspruch 1, wobei die Anordnungen von Rippenformationen (220, 240) spiegelsymmetrisch bezüglich der transversalen Linie (16) sind.

3. Linse nach Anspruch 1 oder Anspruch 2, wobei:
- die erste Seite (220a, 240a) der Rippenformationen (220, 240) gekrümmt ist, vorzugsweise konvex mit einer Wölbung, die von den Linsen (10) nach außen gerichtet ist, und/oder
- die zweite Seite (220b, 240b) der Rippenformationen (220, 240) im Wesentlichen flach ist, und/oder
- die erste Seite (220a, 240a) der Rippenformationen (220, 240) größer ist als die zweite Seite (220b, 240b).

4. Linse nach irgendeinem der vorhergehenden Ansprüche, wobei die zweite Oberfläche (10b) des Linsenkörpers (10) im Wesentlichen flach ist.

5. Linse nach irgendeinem der vorhergehenden Ansprüche, wobei der Linsenkörper (10) kreisförmig ist.

6. Linse nach Anspruch 5, wobei die transversale Linie (16) eine diametrale Linie zu dem kreisförmigen Linsenkörper (10) ist.

7. Linse nach irgendeinem der vorhergehenden Ansprüche, wobei der Linsenkörper (10) ein transparentes Material beinhaltet, vorzugsweise Glas oder Kunststoffmaterial.

8. Beleuchtungsvorrichtung, beinhaltend:
- eine elektrisch betriebene Lichtstrahlungsquelle (L), vorzugsweise eine Festkörperlichtstrahlungsquelle wie beispielsweise eine LED-Quelle, und
- eine Linse (10) gemäß irgendeinem der Ansprüche 1 bis 7, die mit der Lichtstrahlungsquelle (L) gekoppelt ist, wobei die erste Oberfläche (10a) des Linsenkörpers (10) vorzugsweise weg von der Lichtstrahlungsquelle (L) gerichtet ist, wodurch Lichtstrahlung von der Quelle (L) die Linse (10) durchquert.

9. Verfahren zum Bereitstellen einer Beleuchtung einer Oberfläche mittels einer elektrisch betriebenen Lichtstrahlungsquelle (L), vorzugsweise einer Festkörperlichtstrahlungsquelle wie beispielsweise eine LED-Quelle, die Lichtstrahlung hin zu einer Oberfläche projiziert, wobei das Verfahren beinhaltet, dass eine Linse (10) gemäß irgendeinem der Ansprüche 1 bis 7 zwischen die Lichtstrahlungsquelle (L) und die Oberfläche gesetzt wird, wobei eine erste Oberfläche (10a) des Linsenkörpers (10) vorzugsweise von der Lichtstrahlungsquelle (L) weg gerichtet ist.

## Revendications

1. Une lentille pour dispositifs d'éclairage, comprenant un corps de lentille (10) en matériau perméable à la lumière avec une première (10a) et une seconde (10b) surface mutuellement opposées et deux réseaux de formations nervurées (220, 240) sur ladite première surface (10a) du corps de lentille (10) qui s'étendent sur des côtés opposés par rapport à une ligne transversale (16) du corps de lentille (10), les formations nervurées (220, 240) desdits réseaux s'étendant sur ladite première surface (10a) du corps de lentille (10) le long de ladite ligne transversale (16), lesdites formations nervurées (220, 240) présentant :
- un premier côté (220a, 240a) tourné en direction de ladite ligne transversale (16) et un second côté (220b, 240b) tourné en éloignement de ladite ligne transversale (16) ; et
- une concavité desdites formations nervurées tournée en éloignement de ladite ligne transversale (16), ladite concavité augmentant depuis les formations nervurées les plus proches de ladite ligne transversale (16) jusqu'aux formations nervurées les plus éloignées de ladite ligne transversale (16).

2. La lentille de la revendication 1, dans laquelle lesdits réseaux de formations nervurées (220, 240) sont symétriques en miroir par rapport à ladite ligne transversale (16).

3. La lentille de la revendication 1 ou de la revendication 2, dans laquelle :
- ledit premier côté (220a, 240a) des formations nervurées (220, 240) est courbe, de préférence convexe avec une convexité dirigée vers l'extérieur de la lentille (10), et/ou
- ledit second côté (220b, 240b) des formations nervurées (220, 240) est substantiellement plat, et/ou
- ledit premier côté (220a, 240a) des formations nervurées (220, 240) est plus grand que ledit second côté (220b, 240b).

4. La lentille de l'une des revendications précédentes, dans laquelle ladite seconde surface (10b) du corps de lentille (10) est substantiellement plane.

5. La lentille de l'une des revendications précédentes, dans laquelle ledit corps de lentille (10) est circulaire.

6. La lentille de la revendication 5, dans laquelle ladite ligne transversale (16) est une ligne diamétrale dudit corps de lentille circulaire (10).

7. La lentille de l'une des revendications précédentes, dans laquelle ledit corps de lentille (10) comprend un matériau transparent, de préférence du verre ou une matière plastique.

8. Un dispositif d'éclairage, comprenant :
- une source de rayonnement lumineux électriquement alimentée (L), de préférence une source de rayonnement lumineux à l'état solide telle qu'une source LED, et
- une lentille (10) selon l'une des revendications 1 à 7, couplée à ladite source de rayonnement lumineux (L), de préférence avec ladite première surface (10a) du corps de lentille (10) tournée en éloignement de ladite source de rayonnement lumineux (L), de sorte que le rayonnement lumineux provenant de ladite source (L) traverse ladite lentille (10).

9. Un procédé d'obtention d'une illumination d'une surface au moyen d'une source de rayonnement lumineux électriquement alimentée (L), de préférence une source de rayonnement lumineux à l'état solide telle qu'une source LED, projetant un rayonnement lumineux en direction de la surface, le procédé comprenant la mise en place entre ladite source de rayonnement lumineux (L) et ladite surface d'une lentille (10) selon l'une des revendications 1 à 7, de préférence avec ladite première surface (10a) du corps de lentille (10) tournée en éloignement de ladite source de rayonnement lumineux (L).
